# EUROPEAN PATENT APPLICATION

(11) **EP 4 086 832 A1**
(43) Date of publication of application: **09.11.2022**
(21) Application number: 21172143.6
(22) Date of filing: 04.05.2021
(51) Int. Cl.: G06Q 20/02, G06Q 20/06, G06Q 20/38

(54) **COMPUTER-IMPLEMENTED METHOD**

(71) Applicant: Otoplo Ltd, London EC1V 2NX (GB)
(72) Inventor: The designation of the inventor has not yet been filed

(57) **Abstract**

A computer-implemented method of settling a blockchain transaction between a sender and a receiver via an intermediary. The method comprising: (a) the sender generating a smart-contract between the sender and the intermediary, in which a resource from the sender is allocated, the smart-contract having a spend execution condition in which the smart-contract is executable after receipt of a signature of the intermediary, the smart-contract containing uniquely identifiable information; (b) the sender requesting, from the intermediary, that intermediary sign a message to allow execution of the smart-contract; (c) the intermediary examining a list of signed smart-contracts, and upon determining that the uniquely identifiable information corresponding to the smart-contract is not present in the list of signed smart-contracts, generating and signing the message using its private key, adding the uniquely identifiable information to the list of signed smart-contracts, and providing the signature to the sender, wherein the message signed by the intermediary contains the uniquely identifiable information of the smart contract generated by the sender and information identifying the recipient; and (d) the sender preparing and sending a transaction between the sender and receiver, the transaction including the signature from the intermediary and utilising the resource allocated to the smart-contract, the transaction being added to the blockchain and the receiver settling the transaction utilising the signed message, a structure of the smart-contract, and a public key of the intermediary.

## Description

### Field of the Invention

The present invention relates to a computer-implemented method, a blockchain intermediary, a sender, and a receiver.

### Background

Blockchains, or the growing of a list of records which are linked by cryptography, are commonly used for the implementation of cryptocurrencies. These cryptocurrency networks enable the creation, transfer, and storage of value through the use of cryptography and a distributed ledger.

Cryptocurrencies such as Bitcoin solve the 'double-spend' problem through the use of the blockchain and a proof-of-work principle. However, receivers of transactions actioned through a blockchain are incentivized to wait until a certain amount of proof-of-work secures the transaction. The more proof-of-work behind a transaction, the more secure that transaction is. This means that typically in order to have certainty that a transaction has been settled into the chain the receiver must wait some amount of time before considering the transaction valid (the so called 'settlement time').

When a transaction is performed on a cryptocurrency network, the information that it has occurred is usually propagated across the whole network within a second or less. These transactions are added to the mempool. The mempool is the queue of transactions waiting to be included in a block of the relevant blockchain. Until these transactions are included in such a block, they are considered unconfirmed. As discussed above, failure to wait until a sufficient proof-of-work has been established for a given transaction runs the risk of the transaction being found invalid (due e.g. to double-spend).

There is a desire then to provide a method of managing a blockchain in which receivers of transactions do not need to wait for unconfirmed transactions to be confirmed in a block of the blockchain in the conventional manner (by waiting for a sufficient proof-of-work to be established).

### Summary

Accordingly, in a first aspect, embodiments of the present invention provide a computer-implemented method of settling a blockchain transaction between a sender and a receiver via an intermediary the method comprising:
(a) the sender generating a smart-contract between the sender and the intermediary, in which a resource from the sender is allocated, the smart-contract having a spend execution condition in which the smart-contract is executable after receipt of a signature of the intermediary, the smart-contract containing uniquely identifiable information;
(b) the sender requesting, from the intermediary, that intermediary sign a message to allow execution of the smart-contract;
(c) the intermediary examining a list of signed smart-contracts, and upon determining that the uniquely identifiable information corresponding to the smart-contract is not present in the list of signed smart-contracts, generating and signing the message using its private key, adding the uniquely identifiable information to the list of signed smart-contracts, and providing the signature to the sender, wherein the message signed by the intermediary contains the uniquely identifiable information of the smart contract generated by the sender and information identifying the recipient; and
(d) the sender preparing and sending a transaction between the sender and receiver, the transaction including the signature from the intermediary and utilising the resource allocated to the smart-contract, the transaction being added to the blockchain and the receiver settling the transaction utilising the signed message, a structure of the smart-contract, and a public key of the intermediary.

Such a method allows the receiver of the transaction to confirm the transaction without needing to wait for a sufficient amount of proof-of-work to be established, as the intermediary provides assurance that the resource will not be double spent.

Optional features of the invention will now be set out. These are applicable singly or in any combination with any aspect of the invention.

The smart-contract may further include a time out execution condition, in which the smart-contract is executable to return the resource to the sender after a predetermined time period and upon receipt of a signature of the sender. Notably, this ensures that the intermediary does not own or control the resources allocated to the smart-contracts. The smart-contract is non-custodial.

The receiver, upon receiving the transaction, may contact the intermediary and request confirmation data related to the transaction. The transaction may, or may not, include the signed message. The signed message may be generated by the receiver upon receipt of the transaction.

Generating the smart-contract may include generating data (for example uniquely identifiable data) which links the transaction to an assurance pool managed by the intermediary. The confirmation data may include assurance pool address and smart-contract information, which is associated with the smart-contract generated by the sender. The receiver may check a blockchain to confirm the existence of one or more assurance pool smart-contracts and resources held within them. The assurance pool may comprise one or more smart-contracts which contain allocated resources, the smart-contracts being locked until either a predetermined period of time has passed or a pair of signatures and messages are provided to a respective smart-contract. The smart-contracts in the assurance pool may be configured such that if the pair of messages contain a same uniquely identifiable information of a single input but respectively different outputs, and are signed by the same private key of the intermediary, the assurance pool smart-contracts become executable by any entity. The execution condition of the assurance pool smart-contracts may require that the resources are sent to an address not controlled by the intermediary. For example, the resources may be sent to a burn address. By burn address, it may be mean an address from which the resource cannot be spent or further transferred. The execution condition of the assurance pool smart-contracts may require that the resource be sent to each address in the outputs contained in each message.

The receiver, upon receiving the transaction, may determine whether the structure of the smart-contract complies with a predetermined structure, and only settle the transaction if the transaction complies with the predetermined structure.

The smart-contract may include: a public key of the intermediary; and a public key or hash of the public key of the sender.

The request from the sender to the intermediary may contain: an input of the transaction; and a list of outputs from the transaction which correspond to resource being allocated by the sender.

The message signed by the intermediary may further contain: information regarding the input in the transaction; and a list of all of the outputs being used in the transaction. In some examples, the information regarding the input may be a transaction ID, transaction index, and the transaction amount that is used in the input (where the blockchain is implementing a UTXO-based cryptocurrency).

The transaction may require more than one input, and the sender may make multiple requests for signatures to the intermediary, one for each input in the transaction.

In a second aspect, embodiments of the present invention provide a blockchain intermediary, containing one or more processors and a non-transitory computer-readable storage medium, the blockchain intermediary being configured to:
receive a request from a sender of a transaction, requesting that the blockchain intermediary sign a message using its private key to allow execution of a smart contract, the smart-contract containing uniquely identifiable information;
examine a list of signed smart-contracts and, upon determining that the uniquely identifiable information corresponding to the smart-contract is not present in the list of signed smart-contracts:
   generate and sign the message,
   add the uniquely identifiable information to the list of signed smart-contracts, and
   provide the message signature to the sender.

The blockchain intermediary may maintain an assurance pool of resources used in settling transactions.

The blockchain intermediary may be further configured to receive a request from a receiver of the transaction to provide confirmation data related to the transaction and to respond to the request with the confirmation data. The confirmation data may include assurance pool address and smart-contract information, which is associated with the uniquely identifiable information.

The blockchain intermediary may be configured to perform any of the steps ascribed to the intermediary of the first aspect, including any optional features as discussed with respect thereto.

In a third aspect, embodiments of the invention provide a sender, containing one or more processors and a non-transitory computer-readable storage medium, the sender being configured to:
generate a smart-contract between a sender and an intermediary, in which a resource from the sender is allocated, the smart-contract having a spend execution condition in which the smart-contract is executable after receipt of a signature of a message signed by the intermediary;
request, from the intermediary, that a message required to execute the smart-contract be signed using the intermediary's private key; and
upon receiving the signature of the message signed using the intermediary's private key, sending the transaction to the receiver, the transaction utilising the resource allocated to the smart-contract.

The sender may be configured to perform any of the steps ascribed to the sender of the first aspect, including any optional features as discussed with respect thereto.

In a fourth aspect, embodiments of the invention provide a receiver, containing one or more processors and a non-transitory computer-readable storage medium, the receiver being configured to:
receive a transaction from a sender, the transaction being sent from a smart-contract;
determine whether the smart-contract of the transaction complies with a predetermined structure and, when it is determined that the structure of the smart-contract of the transaction complies with the predetermined format:
   obtain confirmation data related to the transaction; and
   upon receiving the confirmation data, settling the transaction.

The receiver may be configured to perform any of the steps ascribed to the receiver of the first aspect, including any optional features as discussed with respect thereto.

The receiver may be configured to obtain the confirmation data from the intermediary.

The invention includes the combination of the aspects and preferred features described except where such a combination is clearly impermissible or expressly avoided.

Further aspects of the present invention provide: a computer program comprising code which, when run on a computer, causes the computer to perform the method of the first aspect; a computer readable medium storing a computer program comprising code which, when run on a computer, causes the computer to perform the method of the first aspect; and a computer system programmed to perform the method of the first aspect.

### Brief Description of the Drawings

Embodiments of the invention will now be described by way of example with reference to the accompanying drawings in which:
Figure 1 illustrates a system;
Figures 2A and 2B show a swim-lane diagram illustrating a method;
Figure 3 is an example of a smart-contract structure in which resources can be allocated;
Figure 4 is a table showing an example of a database of signed contracts; and
Figure 5 is an example of an assurance pool smart-contract format.

### Detailed Description and Further Optional Features

Aspects and embodiments of the present invention will now be discussed with reference to the accompanying figures. Further aspects and embodiments will be apparent to those skilled in the art.

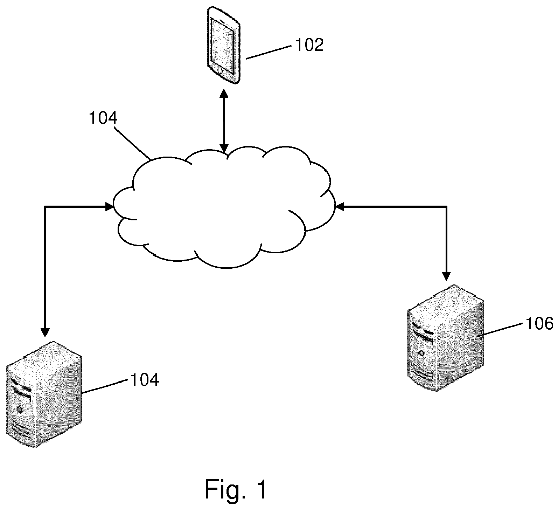

Figure 1 shows a system. The system includes sender 102, an intermediary 104, and a receiver 106. The components of the system are connected to one another via network 108, and so are able to exchange messages.

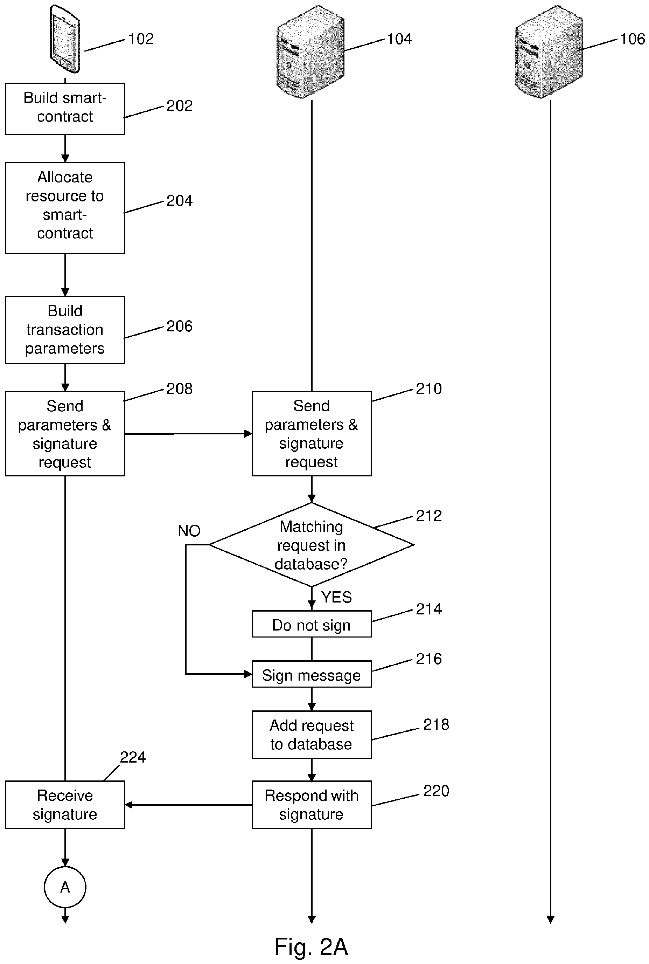

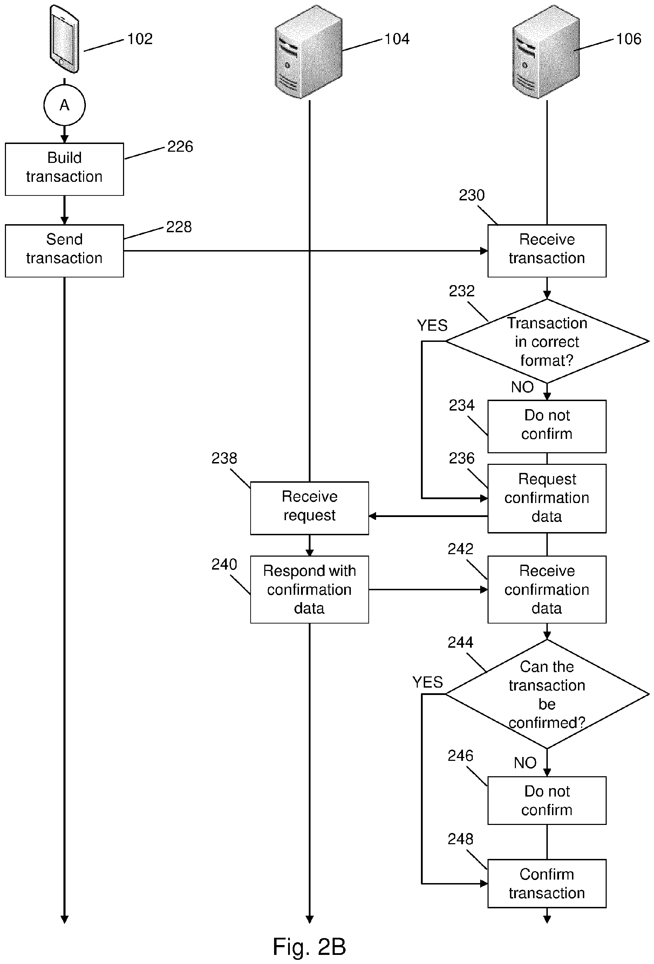

Figures 2A and 2B show a swim-lane diagram illustrating a method performed using the system of Figure 1. In a first step 202, sender device 102 (in this example embodied as a smart-phone, but it may be any computing device) builds or generates a smart-contract according to a predefined structure (discussed in detail below). Once the smart-contract has been built, the sender allocates resources to the smart-contract in step 204. This information is shared to a linked assurance pool which is discussed in detail below. These steps are performed before the sender wishes to use the resource in a blockchain transaction. The smart-contract may be built or generated by wallet software (for example a cryptocurrency wallet) running on a device. The wallet software may include a predefined definition of the smart-contract structure to be used.

Subsequently, at a time when the sender wishes to use the resource allocated to the smart-contract, transaction parameters are built in step 206. These transaction parameters include a signature of the transaction, a signature of a message, and uniquely identifiable information which can be used to identify the smart-contract to which the transaction relates (e.g. a transaction ID). Next, in step 208, the transaction parameters and a request for a signature transmitted to intermediary 104. An example of a request for the signature, illustrating the required format, is shown below:

```
 {"inputcount": "2",
 "inputs": [
    {
      "txid":"5f6734615a59ddd117c6bca664ff81abc92bf47fc1537d103a2ec6a93590a0f9",
      "index": "0",
      "amount": "100000"
    },
    { "txid":
 "c3d2ee869e465872100ca95a3150a80e98fe1ec58499ec0a6e3b2a66b923cd2a",
      "index": "1",
      "amount": "10000"
 } ],
 "outputs": [
    {
      "address": "bitcoincash:qpqc02nrrlx74uusawfn7dfkwkzaqup4gv03yhjt4l",
      "amount": "1233200",
 } ],
```

The intermediary receives the request and parameters in step 210, and then determines, from the transaction parameters, whether a smart-contract corresponding to the one it has been asked to sign is already present in a database of signed smart-contracts. If so, 'YES', the method moves to step 214 and the intermediary does not sign the message. If not, 'NO', the method moves to step 216 and the message is signed. An example of a response from the intermediary, with a signed message, is shown below:

```
 {
 "inputcount": "2",
 "inputs": [
   {
      "txid": "5f6734615a59ddd117c6bca664ff81abc92bf47fc1537d103a2ec6a93590a0f9",
      "index": "0",
      "signature":
 "30450221009a97f2665b7e11032d5ea6aa6d40b93163d166f524795b6a0710e35106ae21fe022004ec
 f4a67fcc0493d02e8d07cb4da21c26c9084b348b58efbe6c9f6fb0676ec5"
   },
   { "txid": "c3d2ee869e465872100ca95a3150a80e98fe1ec58499ec0a6e3b2a66b923cd2a",
      "index": "1",
      "signature":
 "3045022100e2b93f58b114074efe3d8007abaa7ac75dd22a8df7329f1fde6a7b294db55efe0220063ec
 9e97c5313a4011c15caaaf63a15a10d0a7ba9f6f09e30c76cd1ebf9e539"
   }
 }
```

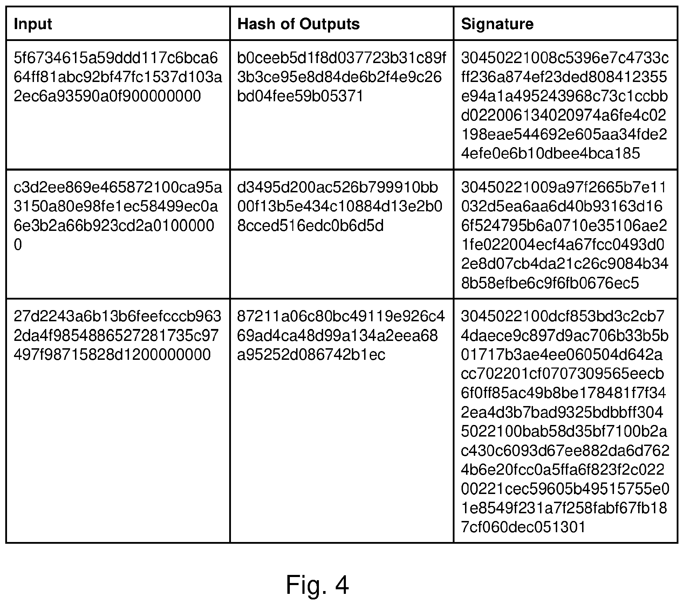

The information used in step 212 is at least the uniquely identifiable information, which may include an unspent transaction output (UTXO). Once the intermediary has signed the message, the uniquely identifiable information is added to the database (an example of which is shown in Figure 4) in step 218 and the intermediary then replies with the signed message in step 220. Steps 216 and 218 can be performed in either order, or sequentially. The sender receives the signed message in step 224. The messages exchanged between the sender and the intermediary may be, for example, through an application programming interface or API.

Next, and now moving to Figure 2B, the sender 102 builds a transaction in step 226 using the received signed message. An example of a transaction built by a sender is shown in Annex 1. The transaction is then sent in step 228 to a receiver 106 of the blockchain transaction, who receives it in step 230. The receiver then determines, in step 232, whether the transaction is in a predetermined correct structure (discussed in detail below). If not, 'NO', the method moves to step 234 and the transaction is not settled. The sender and receiver would then need to wait until a sufficient proof of work had been established in the blockchain before the transaction could be deemed valid.

When it is determined that the transaction is in the correct format, 'YES', the method moves to step 236. The receiver 106 then uses information in the transaction (e.g. the uniquely identifiable information) to send a request to the intermediary 104 that confirmation data be provided. An example of this request is shown below:

```
 { "Intermediary Public Key":
 "0ec98d51bb81337cb547a56cf98486f5ec553ff8fb0fd3fbfc467f326f232531"
 }
```

The intermediary 104 receives the request in step 238, and replies with the confirmation data in step 240. The confirmation data can include, for example, associated assurance pool UTXO information. An example of the response is shown below:

```
 { "Intermediary Public Key":
 "0c98d51bb81337cb547a56cf98486f5ec553ff8fb0fd3fbfc467f326f232531",
 "address": "bitcoincash:qhuc02nrrlx64yusawfn7dfkwkzaqup4gv03yhjt4l",
 "Smart-contract":
 "034f544f0385f21514f669c06f46adff4222b3b396a69867c10c757d9241 04bd4190c8b661247
 07370fa546bf9265481 e4edde2c49bed28fb7722713ee3dde90b1d3b5d01c67a61c29af3f8c0
 71b45ceba4132ed7c938be78f8950d4d1f900537a755379009c63547901447f7701247f82013
 4947f77587f547f7701207f75587a7b7e7b7e7c7e7b5779A988557a567a6e7c828c7f75587aa
 87bbbad547a7c7bba777767547a519d717cad7bb16d6d5168"
 }
```

Alternatively, the receiver 106 may directly check with the blockchain itself to ascertain whether the confirmation data will allow the transaction to be settled. For example, where the method is implemented on a blockchain which allows for smart-contracts to be included in the blockchain itself the receiver can check with the blockchain to ascertain whether the assurance pool exists and is appropriate to allow the transaction to be settled.

The confirmation data allows the receiver, in step 244, to determine whether the transaction can be settled. If not, 'NO', the method moves to step 246 and the transaction is not settled (and then, as above, the sender and receiver would need to wait for a sufficient proof-of-work to be established). If so, 'YES', the method moves to step 248 and the transaction is settled. The receiver can consider the payment to have been made, and can release the goods or services to the sender without fear of the resource being double-spent.

### Smart-contract

The smart-contract as discussed above places spending requirements on the resources allocated therein, for example funds, so that they can only be sent to a single set of non-predetermined outputs. The smart-contract also provides a standard smart-contract structure which is checked (as discussed above) by the receiver to verify the spending requirements.

The smart-contract is setup with an initial set of parameters including:
- A public key of the intermediary;
- A public key or hash of the public key of the sender; and
- A 'lock-time' of the smart-contract. The lock-time is a time in the future at which the funds can be spent once all other spending requirements have been met.

The smart-contract restricts the spending of funds within it to two specific sets of parameters and requirements. One of the sets of requirements to be fully satisfied before the resources can be spent. The first set of parameters are:
- A signature of the transaction; and
- A signature of a message.

The first set of spending requirements are:
- The transaction signature is signed by the private key of the sender.
- The message signature passed to the contract is signed by the private key of the intermediary;
- Each message signed by the intermediary that is used in the transaction contains an input of the transaction and information about the outputs of the transaction; and
- The transaction contains a message with the above information for every input in the transaction.

In an alternative example, the message with the above information is not a spending requirement. Instead, the message is generated from the information of the transaction itself by the sender. This means that the sender and intermediary can generate the message by knowing that the information will, subsequently, be used to generate the transaction. The receiver is also able to generate the message from getting the transaction information from the blockchain. The transaction itself can also generate the message to be checked against the intermediary's signature using the information about itself.

By using a smart-contract architecture which builds the message needed to execute the smart-contract from the transaction itself, the transaction can require significantly less data than if it required the full message. For example, a minimum message size might be 60 bytes, whereas it may only require 10 bytes of smart-contract code to generate the message. A unique message would still be required for each input used in the transaction, and so the saving in data scales with the number of inputs. This implementation reduces the overall cost of using the method and further reduces the resource requirements on the blockchain to transmit and store the data.

There is also a second set of parameters and spending requirements that can be satisfied to spend the resource locked in the smart contract. The parameter is: a transaction signature. The spending requirements are:
- The transaction signature is signed by the private key of the sender; and
- The lock-time of the smart-contract has expired.

If the sender can satisfy either of the above two sets of spending requirements by providing the required parameters at the right time then they will be able to provide a valid transaction to the blockchain (e.g. via a cryptocurrency network).

### Intermediary

As discussed above, the function of the intermediary is to provide the signatures required to unlock resources held in the smart-contracts and filter any double-spend transactions to stop them from becoming valid transactions. The intermediary will only provide signatures to non-double-spent transactions, and it is incentivised to do so through the assurance pool (discussed below).

The intermediary takes requests to sign messages using its private key, and then provides the signatures to the requester. The messages signed by the intermediary correspond to the signatures required by the smart-contract to be spent. Each request to the intermediary has the following information:
- The inputs of the transaction; and
- All of the outputs of the transaction that are being spent by the spender.

The intermediary then checks a database for an existing entry for the provided transaction ID, as discussed above. The intermediary is the only entity with write access to the database. If an entry for the transaction ID is found, the intermediary does not sign the message and an error response can be provided to the requestor. If no entry for the transaction ID is found then the transaction ID is entered into the database. The intermediary then signs a message using its private key. The information of the message includes:
- The input in the transaction; and
- A summary of all the outputs used in the transaction, this can be provided in the form of a hash of the outputs.

The intermediary can then provide the new signature for the message to the requester.

### Assurance pool

The assurance pool provides a trust-less way of proving to the receiver of a transaction sent via a smart-contract that if the intermediary allows a double-spend to occur, it will be subject to significant cost. The assurance pool is set up such that if a double-spend occurs, some or all of the resources in the assurance pool can be sent to an address not controlled by the intermediary. In some examples, this may mean that the resources are burnt (i.e. spent to a receiver from whom funds cannot be recovered).

The assurance pool is a set of resources locked in a smart-contract with an initial set of parameters. The minimum parameters required are:
- At least one public key of the intermediary; and
- The lock-time of the smart-contract.

The assurance pool smart-contracts have two sets of parameters and spending requirements. The parameters for the first set are:
- A message that has been signed by the intermediary;
- The signature of that message;
- A second message that has been signed by the intermediary; and
- The signature of that message.

The parameters may include a public key and a signature.

The first set of spending requirements are that:
- The first signature of the intermediary matches the first message, and is signed using the intermediary's private key;
- The second signature of the intermediary matches the second message, and is signed using the intermediary's private key;
- The two messages contain the same input information (i.e. uniquely identifiable information);
- The two messages contain two different summaries of outputs (e.g. hashes); and
- The resources are spent to an address not controlled by the intermediary, for example to a burn address.

The first set of spending requirement may further include the signature of the transaction being signed by the private key of the person spending the contract (noting that this can be from anyone).

The second set of parameters includes: at least one signature.

The second set of spending requirements are that:
- The transaction signature must be signed by the private key of the intermediary; and
- The lock-time of the assurance pool smart-contract has expired.

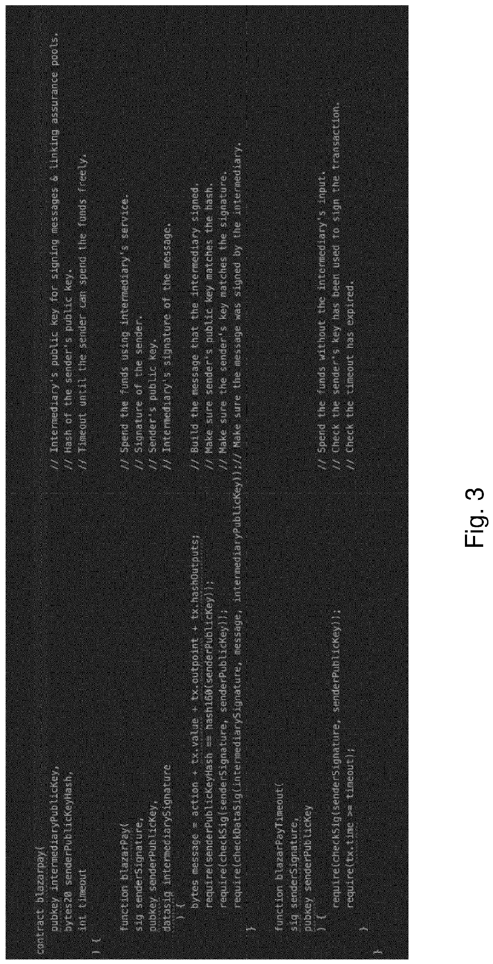

Figure 3 is an example of a smart-contract structure in which resources can be allocated. It specifies, for example, that building a smart-contract according to the structure requires the use of the intermediary and sender's public keys. It specifies the two executable conditions: (i) blazarPay, in which messages from the intermediary are received which allows the contract to be executed; and (ii) blazarPayTimeout, which specifies that the sender is able to spend the funds without the intermediary's messages after the timeout has expired.

Figure 4 is a table showing an example of a database of signed contracts. The database contains three columns: inputs; hash of outputs; and signature provided. It is this database which intermediary refers to when determining whether or not to sign a message in response to a request from a sender.

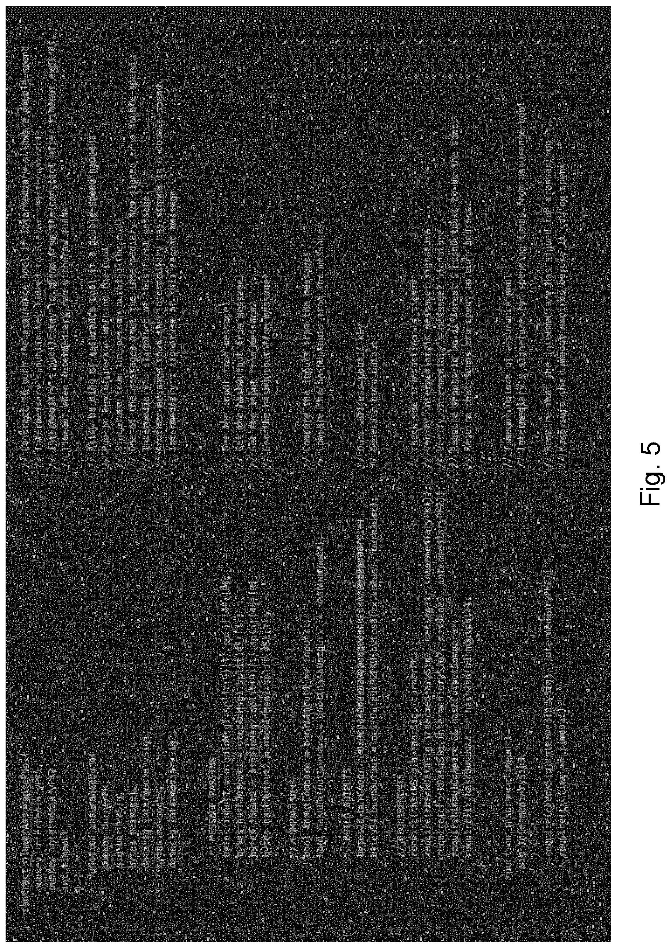

Figure 5 is an example of an assurance pool smart-contract format. As can be seen, it in essence defines a set of conditions under which resources will be sent to an address which is not controlled by the intermediary if the intermediary allows a double-spend. In some examples the resources are burnt.

The method as disclosed above is suitable for providing faster confirmation of payments using a blockchain or cryptocurrency. It can also be used be used to make transfers between cryptocurrency exchanges instant. Further, an instant non-custodial cryptocurrency exchange can be built on top of a multi-token cryptocurrency by using the disclosed method. A non-custodial cryptocurrency exchange is possible on top of a multi-token cryptocurrency through the use of 'atomic swaps'. Usually, the users of this type of exchange would need to wait until sufficient proof-of-work exists before they are able to trade the resources again. By using the disclosed method, as soon as a trade happens on the exchange another trade can occur.

Further, a smart-contract is traditionally activated once the address of the smart-contract receives a specific input (e.g. resource). Once the specific input has been received at the address, the address is publicly visible on the blockchain. In some scenarios, it may be beneficial to have a smart-contract be executed but not be publicly visible on a block chain. By using the method disclosed herein, it is possible to create a transaction which sends a specific input to a specific smart-contract and to have it provably locked in this action using the disclosed method. It is then possible to wait before publishing the transaction to the blockchain. As long as there is still time until the time-lock expires, and as long as the counterparties to the transaction also have access to the transaction then the transaction can be considered to be settled as it cannot be spent anywhere else.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### ANNEX 1

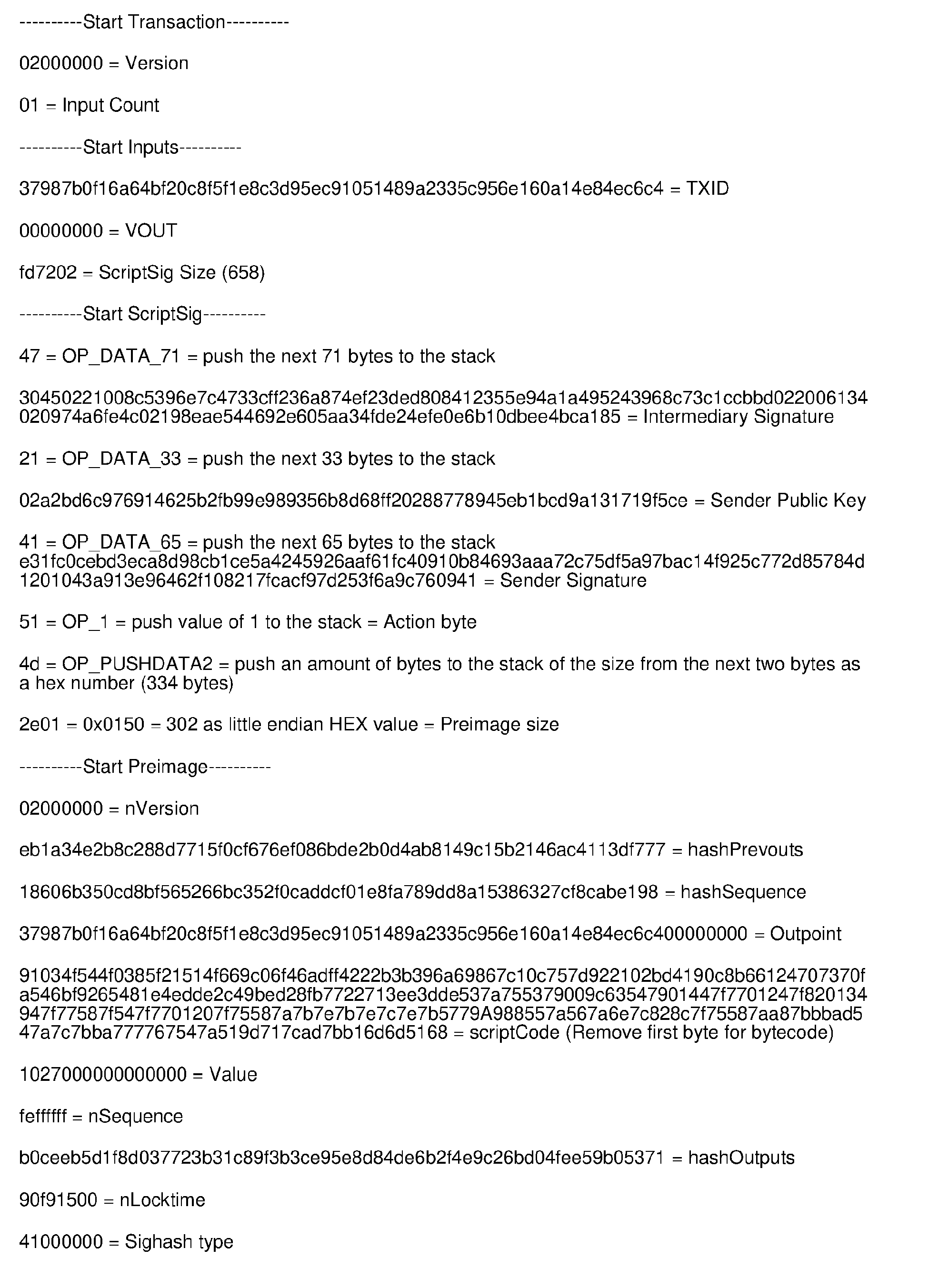

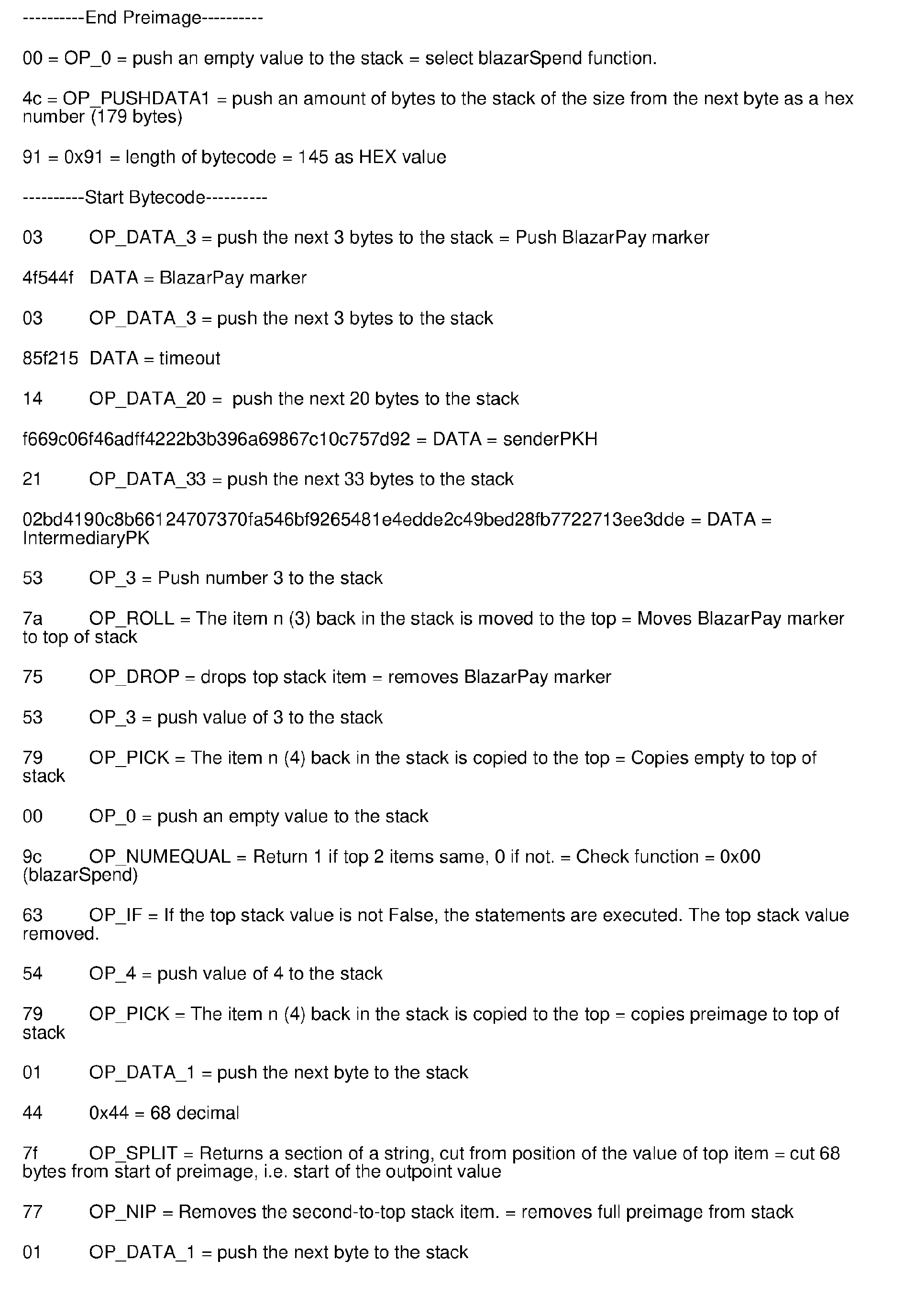

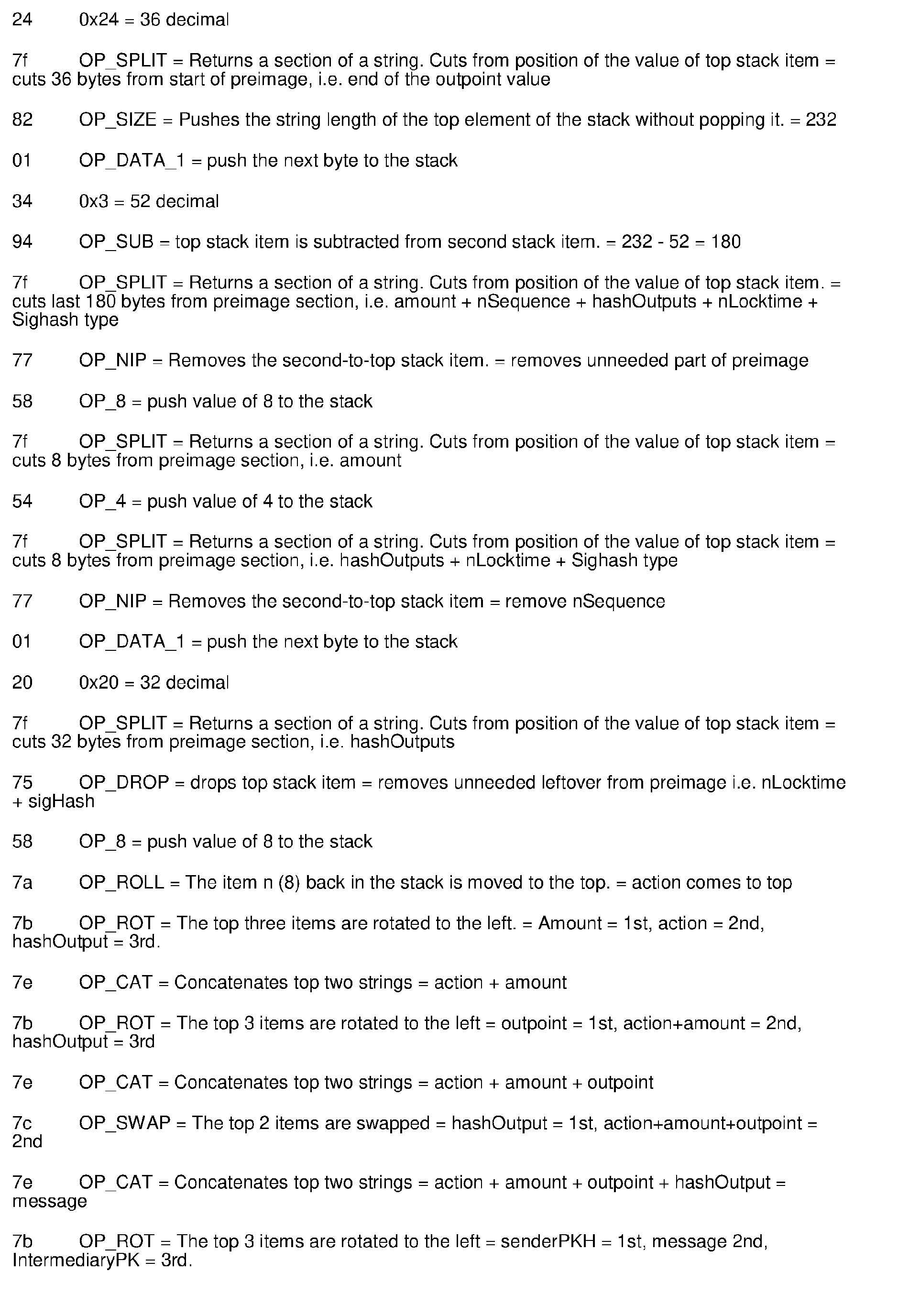

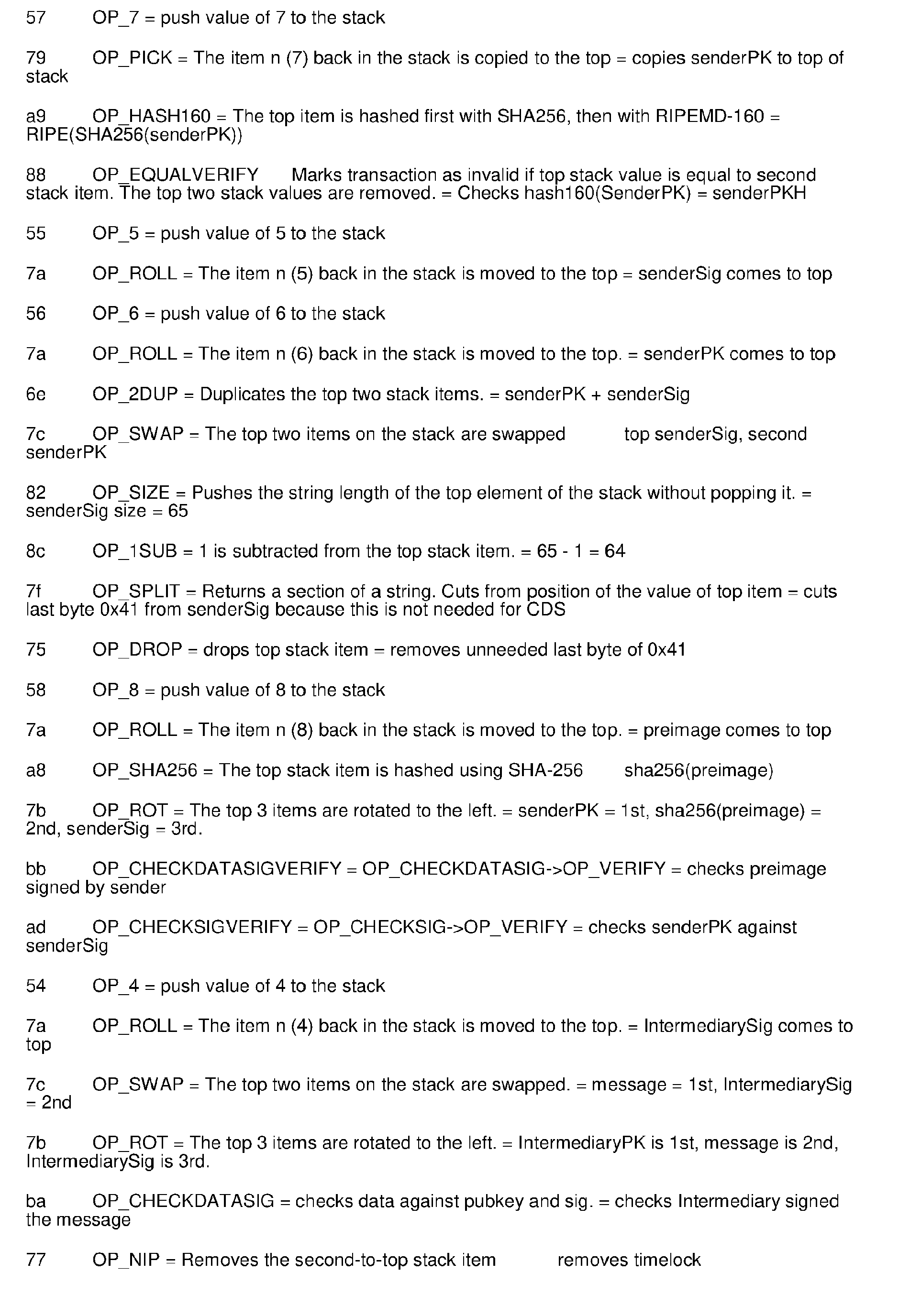

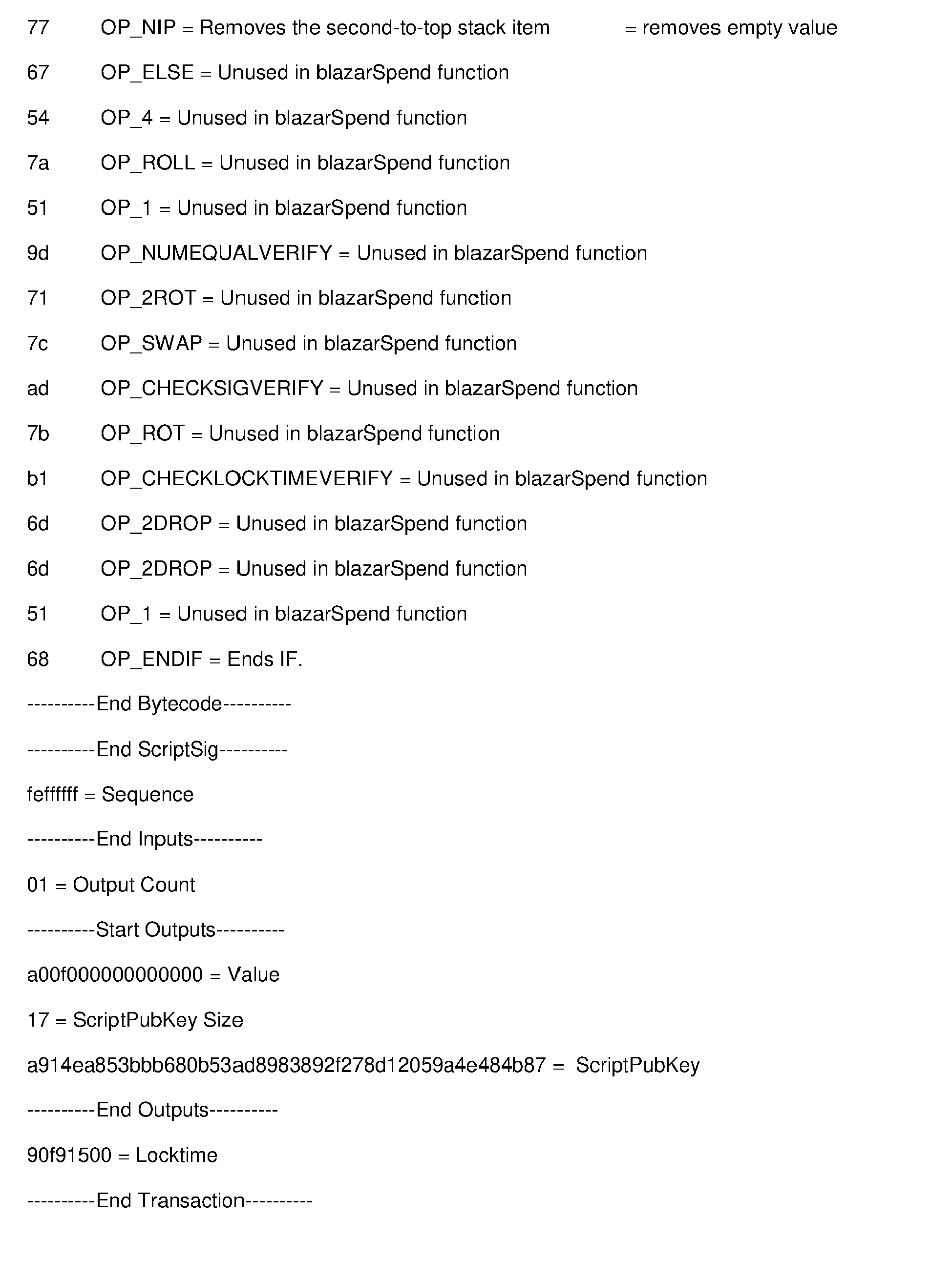

## Claims

1. A computer-implemented method of settling a blockchain transaction between a sender and a receiver via an intermediary the method comprising:
(a) the sender generating a smart-contract between the sender and the intermediary, in which a resource from the sender is allocated, the smart-contract having a spend execution condition in which the smart-contract is executable after receipt of a signature of the intermediary, the smart-contract containing uniquely identifiable information;
(b) the sender requesting, from the intermediary, that the intermediary sign a message to allow execution of the smart-contract;
(c) the intermediary examining a list of signed smart-contracts, and upon determining that the uniquely identifiable information corresponding to the smart-contract is not present in the list of signed smart-contracts, generating and signing the message using its private key, adding the uniquely identifiable information to the list of signed smart-contracts, and providing the signature to the sender, wherein the message signed by the intermediary contains the uniquely identifiable information of the smart contract generated by the sender and information identifying the recipient; and
(d) the sender preparing and sending a transaction between the sender and receiver, the transaction including the signature from the intermediary and utilising the resource allocated to the smart-contract, the transaction being added to the blockchain and the receiver settling the transaction utilising the signed message, a structure of the smart-contract, and a public key of the intermediary.

2. The computer-implemented method of claim 1, wherein the smart-contract further has a time out execution condition, in which the smart-contract is executable to return the resource to the sender after a predetermined time period and upon receipt of a signature of the sender

3. The computer-implemented method of claim 1 or claim 2, wherein the receiver, upon receiving the transaction, contacts the intermediary and requests confirmation data related to the transaction.

4. The computer-implemented method of any preceding claim, wherein generating the smart-contract includes generating data which links the transaction to an assurance pool managed by the intermediary.

5. The computer-implemented method of claim 4 as dependent on claim 3, wherein the confirmation data includes assurance pool address and smart-contract information, which is associated with the smart-contract generated by the sender.

6. The computer-implemented method of any preceding claim, wherein the receiver, upon receiving the transaction, determines whether the structure of the smart-contract complies with a predetermined structure , and only settles the transaction if the transaction complies with the predetermined structure.

7. A blockchain intermediary, containing one or more processors and a non-transitory computer-readable storage medium, the blockchain intermediary being configured to:
receive a request from a sender of a transaction, requesting that the blockchain intermediary sign a message using its private key to allow execution of a smart-contract, the smart-contract containing uniquely identifiable information;
examine a list of signed smart-contracts and, upon determining that the uniquely identifiable information corresponding to the smart-contract is not present in the list of signed smart-contracts:
generate and sign the message,
add the uniquely identifiable information to the list of signed smart-contracts, and
provide the message signature to the sender.

8. The blockchain intermediary of claim 7, wherein the blockchain intermediary maintains an assurance pool of resources used in settling transactions.

9. The blockchain intermediary of claim 7 or 8, wherein the blockchain intermediary is further configured to receive a request from a receiver of the transaction to provide confirmation data related to the transaction and to respond to the request with the confirmation data.

10. The blockchain intermediary of claim 9 as dependent on claim 8, wherein the confirmation data includes assurance pool address and smart-contract information, which is associated with the smart-contract generated by the sender.

11. A sender, containing one or more processors and a non-transitory computer-readable storage medium, the sender being configured to:
generate a smart-contract between a sender and an intermediary, in which a resource from the sender is allocated, the smart-contract having a spend execution condition in which the smart-contract is executable after receipt of a signature of a message signed by the intermediary;
request, from the intermediary, that a message required to execute the smart contract be signed using the intermediary's private key; and
upon receiving the signature of the message signed using the intermediary's private key, sending the transaction to the receiver, the transaction utilising the resource allocated to the smart-contract.

12. A receiver, containing one or more processors and a non-transitory computer-readable storage medium, the receiver being configured to:
receive a transaction from a sender, the transaction being sent from a smart-contract;
determine whether the smart-contract of the transaction complies with a predetermined structure and, when it is determined that the structure of the smart-contract of the transaction complies with the predetermined structure:
obtain confirmation data related to the transaction; and
upon receiving the confirmation data, settling the transaction.

13. The receiver of claim 12, wherein the confirmation data includes assurance pool addresses and smart-contract information which describes an assurance pool, and the receiver is configured to check a blockchain to confirm the existence of one or more assurance pool smart-contracts and resources held within them.

14. The receiver of claim 13, wherein the assurance pool comprises one or more smart-contracts which contain allocated funds, the smart-contracts being locked until either a predetermined period of time has passed or a pair of predefined signatures and messages are provided to a respective smart-contract.

15. The receiver of claim 14, wherein the smart-contracts in the assurance pool are further configured such that if the pair of messages contain a same uniquely identifiable information of a single input but respectively different outputs, and are signed by the same private key of the intermediary, the assurance pool smart-contract becomes executable by any entity.
